# EUROPEAN PATENT APPLICATION

(11) **EP 2 605 486 A1**
(43) Date of publication of application: **19.06.2013**
(21) Application number: 12006725.1
(22) Date of filing: 26.09.2012
(51) Int. Cl.: H04L 29/12

(54) **Method and system for handling a domain name service request**

(30) Priority: 13.12.2011 US 201113324735
(71) Applicant: Broadcom Corporation, Irvine, CA 92617 (US)
(72) Inventor: Baginski, Alan, 01845 North Andover MA (US); Robey, Joshua, 03049 Hollis NH (US)
(74) Representative: Jehle, Volker Armin

(57) **Abstract**

A method and system is provided for handling Domain Name Service ("DNS") requests. A network interface device can broadcast multiple virtual addresses to a client device, where the multiple virtual addresses correlate to multiple actual DNS server addresses. The network interface device can process a DNS request originating from the client device, where the DNS request is directed to one of the multiple virtual addresses and where the DNS request is based on DNS server management logic executing on the client device.

## Description

### 1. Technical Field.

This disclosure relates to Domain Name Service ("DNS"). More particularly, this disclosure relates to handling DNS requests.

### 2. Background.

The continual expansion of the Internet has provided user access to a constantly growing set of online websites. Complex infrastructures have been erected to allow network devices to communicate with remote servers or devices up to thousands of miles away. One innovation used to facilitate Internet access is DNS protocols and technologies. DNS protocols and server technologies allow network devices to obtain Internet Protocol ("IP") addresses from internet names more commonly used by human users (e.g., www.google.com). DNS servers are employed to resolve DNS queries from devices on a network.

### BRIEF SUMMARY OF THE INVENTION

According to an aspect, a method for handling DNS requests comprises:
broadcasting, from a network interface device, multiple virtual addresses to a client device, where the multiple virtual addresses correlate to multiple actual DNS server addresses; and
processing, by the network interface device, a received DNS request originating from the client device, where the DNS request is directed to one of the multiple virtual addresses and where the DNS request is based on DNS server management logic executing on the client device.

Advantageously, processing a DNS request comprises:
forwarding the DNS request to a DNS server identified by one of the multiple actual DNS server addresses;
receiving a response to the DNS request originating from the DNS server; and
transmitting the received response to the DNS request for routing to the client device.

Advantageously, the broadcasting and the processing implement a DNS proxy according to the Dual Stack Lite model.

Advantageously, the received DNS request originating from the client device comprises a destination address field, the destination address field storing one of the multiple virtual addresses.

Advantageously, the multiple virtual addresses include IPv4 addresses and the multiple actual DNS server addresses include IPv6 addresses.

Advantageously, the network interface device comprises a cable modem.

According to an aspect, a system for handling a DNS request comprises:
a processor;
a communication interface coupled to the processor; and
a memory coupled to the processor and communication interface, the memory comprising:
   a mapping table;
   mapping logic that, when executed by the processor:
      correlates an actual DNS server address to a virtual address through storing a mapping entry in the mapping table;
   broadcast logic that, when executed by the processor, transmits the virtual address to a client device;
   translation logic that, when executed by the processor:
      prepares a DNS request for transmission to a DNS server identified by the actual DNS server address, where the DNS request originates from the client device, is directed to the virtual address, and is based on DNS server management logic executing on the client device; and
      prepares a response to DNS request for transmission to the client device; and
   routing logic that, when executed by the processor:
      receives, through the communication interface, communications originating from the client device or the DNS server; and
      forwards, through the communication interface, communications for routing to the client device or the DNS server.

Advantageously, correlating by the mapping logic executed by the processor comprises:
receiving, through the communication interface, an actual DNS server address, where the actual DNS server address identifies a DNS server on a network;
mapping the actual DNS server address to a virtual address; and
storing a mapping entry in the mapping table, the mapping entry correlating the actual DNS server address and the virtual address.

Advantageously, the system further comprises a translation table; and where preparing, by the translation logic, a DNS request for transmission comprises:
translating the virtual address to the actual DNS server address;
assigning a transaction ID to the DNS request;
storing a transaction entry in the transaction table, the transaction entry identifying the client device the DNS request originated from; and
producing an updated DNS request based on the DNS request, where the updated DNS request is directed to the DNS server and comprises a transaction ID field storing the transaction ID of the DNS request.

Advantageously, preparing, by the translation logic, a response to a DNS request for transmission comprises:
producing an updated response to a DNS request based on the response to a DNS request, where the updated response to a DNS request comprises a destination address field, the destination address field of the updated response to a DNS request storing an IP address of the client device.

Advantageously:
the DNS request comprises a destination address field, the destination address field of the DNS request storing the virtual address; where:
the updated DNS request comprises a destination address field, the destination address field of the updated DNS request storing the actual DNS server address.

Advantageously, the transaction entry comprises the transaction ID and an IP address of the client device.

Advantageously, the processor, the communication interface, and the memory comprising the mapping table, the translation table, the mapping logic, the broadcast logic, the translation logic, and the routing logic are on a network interface device.

Advantageously, the updated DNS request comprises a source address field, the source address field storing an IP address of the network interface device.

Advantageously, the virtual address comprises an IPv4 address and the actual DNS server address comprises an IPv6 address.

According to an aspect, a method for handling a DNS request comprises:
receiving a DNS request originating from a client device, where the DNS request comprises a destination address field, the destination address field of the DNS request storing a virtual address, and where the DNS request is based on DNS server management logic executing on the client device;
translating the virtual address to an actual DNS server address correlated to the virtual address;
producing an updated DNS request, where the updated DNS request comprises a destination address field and transaction ID field, where the destination address field stores the actual DNS server address and where the transaction ID field stores a transaction ID of the DNS request; and
forwarding the updated DNS request for routing to a DNS server identified by the actual DNS server address.

Advantageously, the method further comprises:
assigning a transaction ID to the DNS request;
storing a transaction entry in a transaction table, where the transaction entry comprises the transaction ID of the DNS request and an IP address of the client device the DNS request originated from.

Advantageously, the method further comprises:
receiving a response to the updated DNS request, where the received response to the updated DNS request comprises a source address field, the source address field storing the actual DNS server address;
performing a lookup in the transaction table based on the transaction ID, where the lookup in the transaction table returns the IP address of the client device the DNS request originated from;
producing an updated response to the updated DNS request, where the updated response to the updated DNS request comprises a destination address field, the destination address field of the updated response to the updated DNS request storing the IP address of the client device;
transmitting the updated response to the updated DNS request for routing to the client device.

Advantageously, the receiving, the translating, the producing, and the forwarding implement a DNS proxy according to the DS Lite model.

Advantageously, the virtual address comprises an IPv4 address and the actual DNS server address comprises an IPv6 address.

### BRIEF DESCRIPTION OF THE DRAWINGS

The system may be better understood with reference to the following drawings and description. In the figures, like reference numerals can designate corresponding parts throughout the different views.

Figure 1 is a block diagram of a network system.

Figure 2 is a block diagram of a system for handling a DNS request.

Figure 3 is a block diagram of a system for handling a DNS request.

Figure 4 illustrates a mapping table and a transaction table.

Figure 5 is a block diagram of DNS requests and responses to DNS requests.

Figure 6 is a flow diagram for mapping actual DNS server addresses to virtual addresses.

Figure 7 is a flow diagram for handling a DNS request from a client device.

### DETAILED DESCRIPTION

The described systems and methods can provide networking in a communication system having two or more disparate protocols. For the sake of explanation, the systems and method are described with regard to the IPv4 and IPv6 internet addressing protocols, but other protocols can be used.

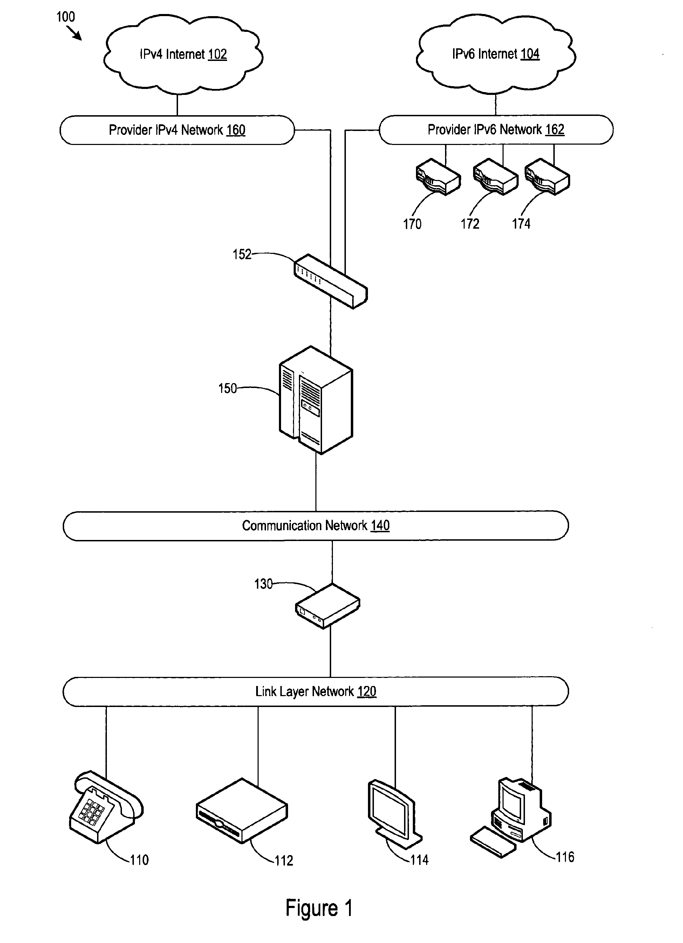

Figure 1 is a block diagram of an exemplary network system 100 for providing devices with Internet access to the IPv4 Internet 102 or the IPv6 Internet 104. The network system 100 can include multiple client devices found in a household or business, such as a Voice over IP ("VoIP") Phone 110, a Blu-Ray player 112, a digital television 114, and a computer 116. The client devices in Figure 1 are connected with a Link Layer network 120, e.g., Ethernet, through which the client devices can communicate with one another. The network system 100 also includes a modem 130, e.g., a cable modem, that can allow client devices (e.g., 110-116) to communicate with external networks, such as the Internet. The modem 130 is connected with the Link Layer network 120 and a communication network 140, e.g. coaxial, fiber-optic, satellite, etc.

The communication network 140 can be maintained by a communication provider, e.g., a cable provider such as Comcast® or Time Warner®, or other communication providers such as T-network (e.g, T1 networks, T2 networks, etc) providers such as Covad®, Digital Subscriber Line (DSL) providers such as AT&T®, or Dial-up providers such as Earthlink®. For cable modem communications, the network system can also include a cable modem termination system ("CMTS") 150 that is connected with the communication network 140. The CMTS 150 can be in communication with a router 152, and the router 152 can be in communication with a provider IPv4 network 160 and a provider IPv6 network 162. The provider IPv4 network 160 and the provider IPv6 network 162 can be local networks maintained by the communication provider. Devices connected to the provider IPv4 network 160 can be assigned IPv4 addresses. Devices connected to the provider IPv6 network 162 can be assigned IPv6 addresses. The provider IPv4 network 160 and the provider IPv6 network 162 can be respectively connected to the IPv4 Internet 102 and the IPv6 Internet 104.

In Figure 1, the provider IPv6 network 162 is connected with a DNS server 170, a DNS server 172, and a DNS server 174. For explanation purposes, three DNS servers are described but more or less DNS servers can be located on the network system 100. Each of the DNS servers 170, 172, and 174 can receive DNS requests originating from a client device (e.g., 110-116). Each of the DNS servers 170, 172, and 174 can be configured to resolve DNS requests by sending IPv4 addresses or IPv6 addresses. As the DNS servers 170-174 are connected to the provider IPv6 network 162, each DNS server 170, 172, and 174 can be assigned an IPv6 address.

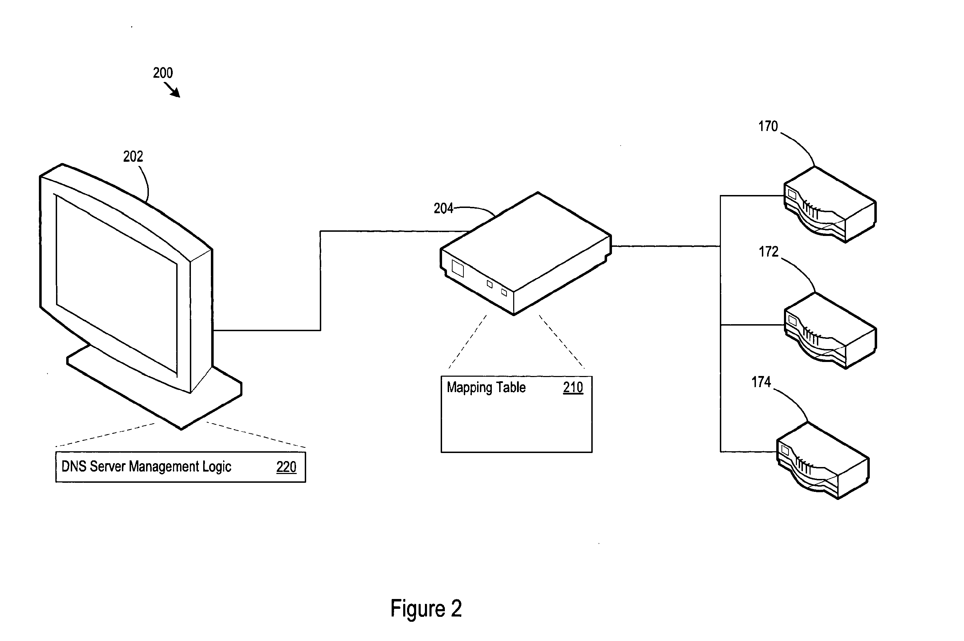

Figure 2 is a block diagram of a system 200 for handling a DNS request. The system 200 includes a client device 202. As discussed in more detail below, the client device 202 can be any computing device that includes DNS server management logic 220. Examples of client devices including DNS server management logic 220 can include desktop computers, laptop computers, tablet computers, cellular phones, digital televisions, high definition (e.g., Blu-Ray™ or DVD audio) media players, portable MP3 players, home media servers, portable e-mail devices, gaming systems and personal data assistants.

The system 200 can also include a network interface device 204 in communication with the client device 202. For example, the network interface device 204 and the client device 202 can be connected through a network, such as local area network, a wireless local area network, a wide area network, a metropolitan area network, a campus area network, or other known networking topologies. The network interface device 204 can provide the client device 202 with a connection to external networks, such as the IPv4 Internet 102 or the IPv6 Internet 104. Examples of network interface devices can include cable modems, DSL modems, or other devices. The network interface device 204 also includes a mapping table 210.

The system 200 in Figure 2 can further include a DNS server 170, a DNS server 172, and a DNS server 174. The network interface device 204 can be in communication with each of the DNS servers 170-174.

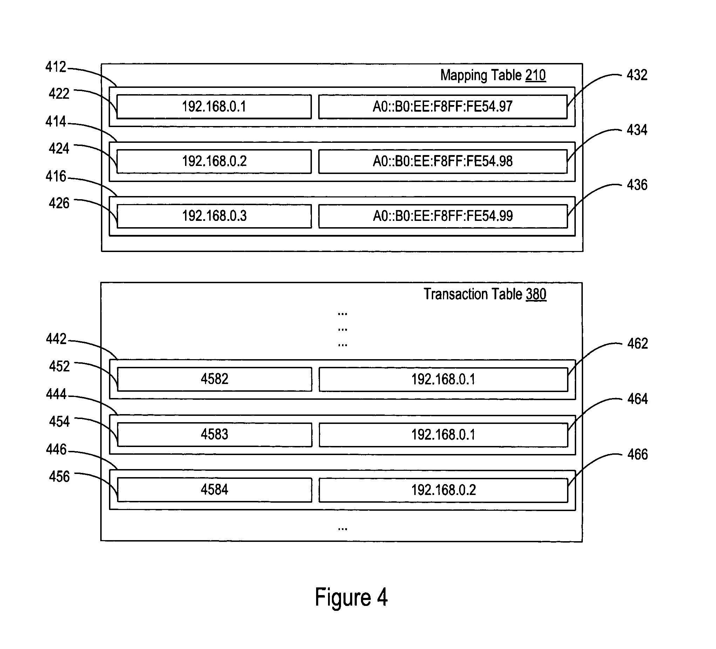

In operation, the network interface device 204 can receive the DNS server addresses (i.e., the IP addresses) of the DNS server 170, the DNS server 172, and the DNS server 174. The DNS server address of the DNS server 170, the DNS server 172, and the DNS server 174 can each be, as an example, an IPv6 address. The network interface device 204 can correlate each of the DNS server addresses with a virtual address, for example, an IPv4 address. Then, the network interface device 204 can store each correlation between a DNS server address and a virtual address as a mapping entry in the mapping table 210. An exemplary mapping table 210 and mapping entries are described in greater detail below in Figure 4.

The client device 202 can query the network interface device 204 for the IP addresses of DNS servers to which the client device 202 can send DNS requests. Alternatively, the network interface device 204 can send the IP addresses of DNS servers to client device 202 without a query from the client device 202. Instead of sending the actual DNS server addresses of the DNS servers located on the network (i.e., DNS servers 170-174), the network interface device 204 can supply the client device 202 with the respective virtual addresses correlated to each of the actual DNS server addresses.

Accordingly, the client device 202, and the DNS server management logic 220 executing on the client device 202, can identify the provided virtual addresses as the addresses of available DNS servers to which the client device 202 can send DNS requests. The DNS server management logic 220 executing on the client device 202 can manage a list of the available DNS servers to which to send DNS requests. The DNS server management logic 220 can track and handle latency and connection issues of individual DNS servers according to an implemented management algorithm. DNS requests directed to a particular DNS server can be generated based on the DNS server management logic 220. As such, the DNS management logic 220 executing on the client device 202 can generate a DNS request directed to any of the virtual addresses provided by the network interface device 204. The client device 202 can then transmit a DNS request having a destination address of any one of the virtual addresses provided by the network interface device 204.

DNS requests directed to a virtual address correlated to an actual DNS server address can be routed to the network interface device 204. The network interface device 204 may not include DNS server management logic 220 to determine a particular DNS server to which to transmit a DNS request. Instead, the network interface device 204 can handle received DNS requests originating from a client device 202 by translating the destination address of the DNS request from the virtual address to the actual DNS server address. The network interface 204 can then forward the DNS request for routing to the DNS server (e.g., 170, 172, or 174) identified by the actual DNS server address.

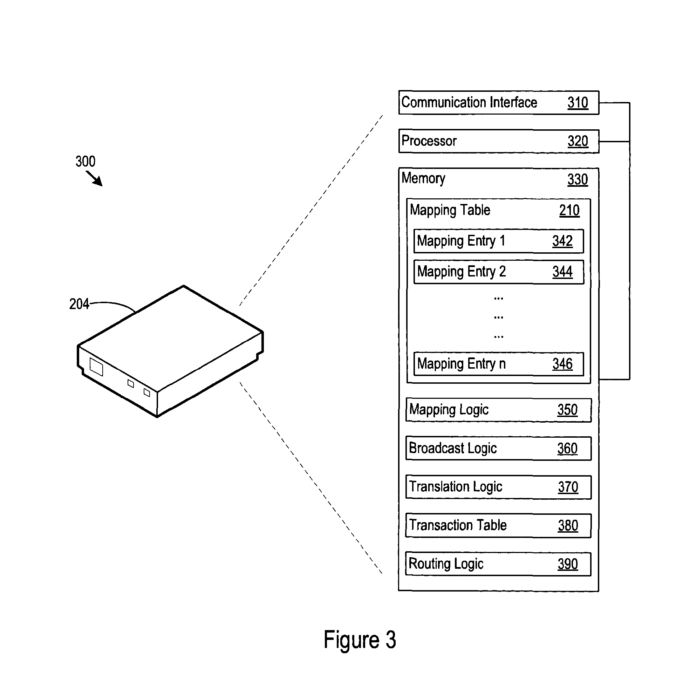

Figure 3 is a block diagram of a system 300 for handling a DNS request. The system 300 includes a network interface device 204. The network device 204 can be a computing device that, in part, implements a transition mechanism from the IPv4 addressing protocol to the IPv6 addressing protocol. One such transition technology is Dual Stack Lite ("DS Lite") model as described in RFC 6333. As an example, the network interface device 204 can operate to implement a DNS proxy, as part of the DS Lite model, to handle DNS requests. The network device 202, and more particularly, the DNS proxy implemented on the network interface device 204, can handle IPv4 DNS requests (i.e., a DNS request directed to a DNS server identified by an IPv4 address) received from the client device 202 and transmit the DNS request to a DNS server identified by an IPv6 address and connected to an IPv6 network (e.g., the provider IPv6 network 162 in Figure 1). The network interface device 204 can be in communication with a client device 202 through a local network (e.g., the Link Layer network 120). The network interface device 204 can also be in communication with one or more DNS servers through a provider network (e.g., the communication network 140 maintained by a communication provider).

The network interface device 204 in Figure 3 can include a communication interface 310 in communication with a processor 320 in communication with a memory 330. The memory 330 can include a mapping table 210, mapping logic 350, broadcast logic, 360, translation logic 370, a transaction table, and routing logic 390. The mapping table 210 can include multiple mapping entries, such as mapping entry 1 342, mapping entry 2 344, and mapping entry n 356, where "n" is an integer. The transaction table 380 can include transaction entries (not pictured). The mapping table 210, the mapping logic 350, the broadcast logic, 360, the translation logic 370, a transaction table 380, and the routing logic 390 can implement a DNS proxy according to the DS Lite model.

In operation, the network interface device 204 can receive, through the communication interface 310, the actual DNS server addresses of one or more DNS servers (e.g., DNS servers 170-174). As an example, the network interface device 204 can receive the actual DNS server addresses from a Dynamic Host Configuration Protocol (DHCP) server. The actual DNS server addresses can be IPv6 addresses. When executed by the processor 320, the mapping logic 350 can receive each of the IPv6 actual DNS server addresses and generate a separate IPv4 virtual address to correlate to each of the IPv6 actual DNS server addresses. The mapping logic 350 can generate IPv4 virtual addresses for commonly used within an internal network. For example, the mapping logic 350 can correlate a first IPv6 actual DNS server address to the IPv4 virtual address 192.168.0.1, a second IPv6 actual DNS server address to the IPv4 virtual address 192.168.0.2, and an n^{th} IPv6 actual DNS server address to the IPv4 virtual address 192.168.0.n, where "n" is an integer. The mapping logic 350 can store each correlated pair within the mapping table 210 as mapping entries (e.g. mapping entries 342, 344, and 346).

The broadcast logic 360, when executed by the processor, can send, through the communication interface 210, each of the IPv4 virtual addresses to the client device 202. In sending the IPv4 virtual addresses, the broadcast logic 360 can identify, to the client device 202, the IPv4 virtual addresses as the IP addresses of available DNS servers the client device 202 can direct DNS requests to. The broadcast logic 260 can send each of the IPv4 virtual addresses to each of the client devices (e.g., client device 202) in communication with the network interface device 204. Moreover, the broadcast logic 360 can send the IPv4 addresses to each new or additional client device that connects to the local network (e.g., a new client device connects to the Link Layer Network 120), including the first client device that connects to the local network. As an alternative, the broadcast logic 360 can communicate a subset of the IPv4 virtual addresses to each of the client devices. For example, the broadcast logic 360 can communicate all but one of the virtual addresses to client devices. As another alternative, the broadcast logic 360 can communicate less than all of the IPv4 virtual addresses to each of the client devices and communicate varying sets of virtual addresses to different client devices.

As discussed above, DNS server management logic 220 executing on the client device 220 can maintain a list of the IPv4 virtual addresses as a list of DNS servers available for the client device 202 to send DNS requests to. The client device 202 can direct a DNS request to one of the IPv4 virtual addresses, and such a DNS request can be routed to the network interface device 204. As an example, a DNS request can include a destination address field, and the destination address field of the DNS request can identify the IPv4 virtual address. When executed by the processor 320, the routing logic 390 can receive, through the communication interface 310, the DNS request directed to the IPv4 virtual address that originated from the client device 202.

The translation logic 370 can then perform a lookup operation in the mapping table 210. The translation logic 370 can lookup the mapping entry in the mapping table 210 that correlates an IPv6 actual DNS server address to the IPv4 virtual address identified in the destination address field of the DNS request. The translation logic 370 can also assign a transaction ID to the DNS request. The transaction ID can identify the DNS request originating from the client device 202. The translation logic 370 can then create a transaction entry in the transaction table 380, and the transaction entry can identify the particular client device (e.g., the client device 202) the DNS request originated from. The transaction entry can identify the originating client device by, for example, storing the transaction ID of the DNS request and the IP address of the client device identified in the source address field of the DNS request (i.e., the IP address of the client device 202).

Next, the translation logic 370 can produce an updated DNS request by updating and adding to the fields of the DNS request originating from the client device 202 ("original DNS request"). The translation logic 370 can update the destination address field of the original DNS request from the IPv4 virtual address to the correlating IPv6 actual DNS server address. The translation logic 370 can update the source address field of the original DNS request from the IP address of the client device 202 (e.g., 192.168.0.1) to the IP address of the network interface device 204. As an example, the network interface device 204 may have an IPv6 address, for example, FE80::2AB:FF:CC9A:4CA2. As an alternative, the network interface device 204 may have an IPv4 address. As part of the update, the translation logic can also add a transaction ID field to the original DNS request. The transaction ID field can store the transaction ID of the original DNS request, as previously assigned by the translation logic 370. The updated DNS request can contain the same DNS query as the original DNS request originating from the client device 202 (e.g., a DNS query to return the IP address of the Uniform Resource Locator ("URL") www.google.com).

As an alternative, the translation logic 370 can produce an updated DNS request by generating a new DNS request. Instead of updating and adding to the existing fields of the original DNS request, the transaction logic 370 can generate a new DNS request. The new DNS request can include a source address field storing the IP address of the network interface device 204, a destination address field storing the correlating IPv6 actual DNS server address, and a transaction ID field storing the transaction ID of the original DNS request originating from the client device 202. The new DNS request can include the same DNS query contained in the original DNS request. This new DNS request generated by the translation logic 370 can then be identified as the updated DNS request.

Once the translation logic 370 has produced the updated DNS request, the routing logic 390 can forward, through the communication interface 130, the updated DNS request for routing to a DNS server identified by the destination address of the updated DNS request (i.e., the IPv6 actual DNS server address).

The updated DNS request can be received by the DNS server identified by the IPv6 actual DNS server address (e.g., the DNS server 170, the DNS server 172, or the DNS server 174). The DNS server can perform a DNS query and communicate a response to the DNS request. By example, the response to the DNS request can include a source address field. The source address field can store the IP address of the DNS server communicating the response (i.e., the IPv6 actual DNS server address). The response to the DNS request can also include destination address field storing the IP address of the network interface device 204 and a transaction ID field storing the transaction ID of the DNS request.

The routing logic 390 can receive the response to the DNS request through the communication interface 310. As discussed above, the source address of the response to the DNS request can be the IPv6 actual DNS server address of the DNS server that resolved the DNS query contained within the updated DNS request (and original DNS request originating from the client device 202). The translation logic 370 can then perform a lookup operation in the mapping table 210. The translation logic 370 can lookup the mapping entry in the mapping table 210 that correlates the IPv6 actual DNS server address with an IPv4 virtual address. The translation logic 370 can perform a lookup in the transaction table 380 based on the transaction ID stored in the transaction ID field of the response to the DNS request. The transaction entry associated with the transaction ID returned from the lookup operation can identify the IP address of the client device 202 that the original DNS request originated from.

The translation logic 370 can then produce an updated response to the DNS request by updating and removing fields from the response to the DNS request received from the DNS server. The transaction logic 370 can update the source address field of the response to the DNS request from the IPv6 actual DNS server address to the correlating IPv4 virtual address. The translation logic 370 can update the destination address field of the response to the DNS request to the IP address of the client device 202, as determined from the transaction table lookup. The translation logic 370 can also update the response to the DNS request by removing the transaction ID field from the response to the DNS request. Similar to the example discussed above, the translation logic can produce an updated response to the DNS request by generating a new response to the DNS request instead of updating and removing fields from the DNS request received from the DNS server.

The routing logic 390 can then transmit, through the communication interface 130, the updated response to the DNS request for routing to the client device 202 identified by the destination address of the updated response to the DNS request.

Figure 4 illustrates an exemplary mapping table 210 and an exemplary transaction table 380. The mapping table 210 in Figure 4 includes three mapping entries - a mapping entry 412, a mapping entry 414, and a mapping entry 416. A mapping entry (e.g., 412, 414, and 416) can include a virtual address field (e.g., 422, 424, and 426) and an actual DNS server address field (e.g., 432, 434, and 436). Each mapping entry can correlate a virtual address to an actual DNS server address. The mapping table 210 can correlate virtual addresses in any addressing protocol to actual DNS server addresses in any addressing protocol. For example, the mapping entries in Figure 4 correlate IPv4 virtual addresses to IPv6 actual DNS server addresses. As another example, a mapping table 210 can correlate IPv6 virtual addresses to IPv4 actual DNS server addresses. Further, virtual addresses can be correlated to actual DNS server addresses in the same addressing protocol (e.g., correlating IPv4 virtual addresses to IPv4 actual DNS server addresses). The mapping logic 350 described above can generate virtual addresses in any addressing protocol.

In Figure 4, the mapping entry 412 correlates the virtual address 192.168.0.1 (an IPv4 address) to the actual DNS server address A0::B0:EE:F8FF:FE54:97 (an IPv6 address). The mapping entry 414 correlates the virtual address 192.168.0.2 to the actual DNS server address A0::B0:EE:F8FF:FE54:98 and the mapping entry 416 correlates the virtual address 192.168.0.3 to the actual DNS server address A0::B0:EE:F8FF:FE54:99.

The mapping table 210 can include any number of mapping entries. The number of entries in the mapping table 210 can depend on the number of DNS servers the network interface device 204 is in communication with. For example, if the network interface device 204 is in communication with eight DNS servers on a network, the mapping table 210 can include eight mapping entries. Continuing the example, broadcast logic 360 can communicate some or all of the eight virtual addresses to any or all of the client devices on a local network in communication with the network interface device 204.

The transaction table 380 can include multiple transaction entries, including the transaction entry 442, the transaction entry 444, and the transaction entry 446. A transaction entry (e.g., 442, 444 and 446) can include a transaction ID field (e.g., 452, 454, and 456) and an originating address field (e.g., 462, 464, and 466). Each transaction entry can identify the client device (e.g., the client device 202) that the DNS request with the assigned transaction ID originated from. For example, in Figure 4, the transaction entry 442 identifies that the DNS request with the assigned transaction ID 4582 originated from the client device with IP address 192.168.0.1. The transaction entry 444 identifies that the DNS request with the assigned transaction ID 4583 also originated from the client device with IP address 192.168.0.1. The transaction entry 446 identifies that the DNS request with the assigned transaction ID 4584 originated from the client device with IP address 192.168.0.2.

The transaction table 380 can include any number of transaction entries. The translation logic can assign unique transaction ID's to DNS requests received from client devices (i.e., assign a DNS request with a transaction ID that does not already exist in the transaction table 380). As an example, the translation logic 370 can assign transaction ID's in sequential order.

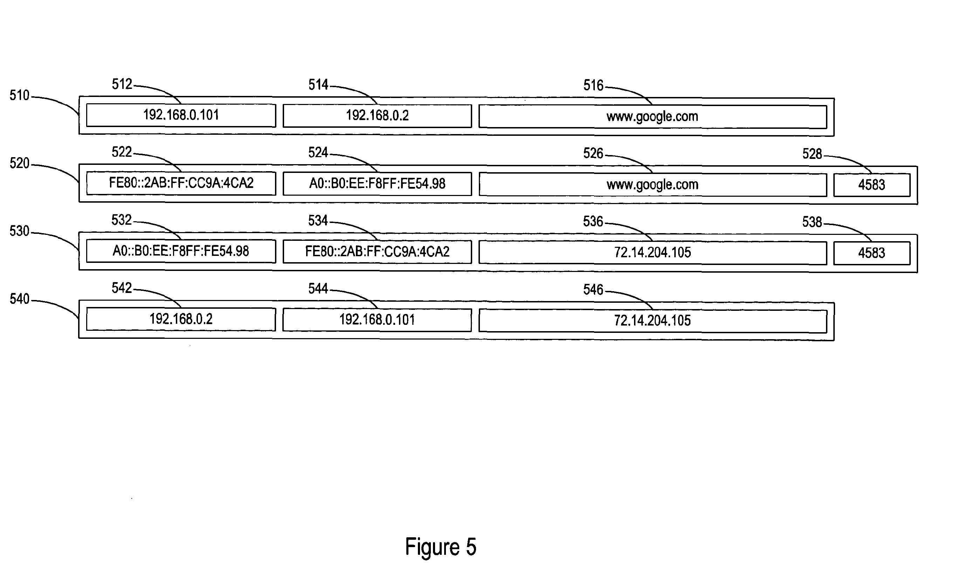

Figure 5 is a block diagram of an exemplary DNS request 510, an exemplary updated DNS request 520, an exemplary response to a DNS request 530, and an exemplary updated response to a DNS request 540. A DNS request can be communicated as a network packet. A DNS request (e.g., 510) and an updated DNS request (e.g., 520) can include a source address field (e.g., 512 and 522), a destination address field (e.g., 514 and 524), and a data field (e.g., 516 and 526). The updated DNS request (e.g., 520) can include a transaction ID field (e.g., 528). A response to a DNS request (e.g., 530) and an updated response to a DNS request (e.g., 540) can also include a source address field (e.g., 532 and 542), a destination address field (e.g., 534 and 544), and a data field (e.g., 536 and 546). The response to a DNS request 530 can include a transaction ID field (e.g., 538).

The DNS request 510, the updated DNS request 520, the response to a DNS request 530, and the updated response to a DNS request 540 in Figure 5 can represent the state of a single DNS query originating from a client device 202 at different points in time. The DNS request 510 can be an exemplary DNS request originating from a client device 202 and received by a network interface device 204. The updated DNS request 520 can be an exemplary updated DNS request sent from a network interface device 204 for routing to a DNS server (e.g., DNS server 170, 172, or 174). The response to a DNS request 530 can be an exemplary response to a DNS request received by the network interface device 204 from a DNS server (e.g., DNS server 170, 172, or 174). The updated response to a DNS request 540 can be an exemplary updated response to a DNS request transmitted from the network device 204 for routing to the client device 202 that the DNS query originated from.

The DNS request 510 can be an exemplary DNS request originating from a client device 202 and received by a network interface device 204. The source address field 512 of the DNS request 510 identifies the IP address of the client device 202 the DNS request originated from, i.e., the client device 202 with the IPv4 IP address of 192.168.0.101. The destination address field 514 of the DNS request 510 in Figure 5 indicates the DNS request 510 is directed to the DNS server identified by the IP address 192.168.0.2, which can be a virtual address provided by the broadcast logic 360, as discussed above. The data field 516 of the DNS request 510 indicates the DNS request 510 involves a DNS query to translate the URL identified as www.google.com into an IP address.

The updated DNS request 520 can be an exemplary updated DNS request produced by the translation logic 370 based on the DNS request 510. The updated DNS request 520 can be sent from a network interface device 204 for routing to a DNS server (e.g., DNS server 170, 172, or 174). The source address field 522 of the updated DNS request 520 can be updated from the source address field 512 of the DNS request 510 to indicate that the updated DNS request 520 originated from the network device 204, as identified by the IPv6 address FE80::2AB:FF:CC9A:4CA2. The destination address field 524 of the DNS request 520 can be translated from the virtual address stored in the DNS request 510 to the actual DNS server address correlated to the virtual address. As such, the virtual address 192.168.0.2 can be translated to the correlated IPv6 actual DNS server address of A0::B0:EE:F8FF:FE54.98, as indicated in the destination address field 524 of the DNS request 520. The data field of the DNS request 520 can continue to remain www.google.com. The updated DNS request 520 can also include a transaction ID field to store the transaction ID assigned by the translation logic 370 to the DNS request 510 that the updated DNS request 520 is based upon. In Figure 5, the updated DNS request 520 includes a transaction ID of 4583.

The response to a DNS request 530 can be an exemplary response to a DNS request received by the network interface device 204 from a DNS server (e.g., DNS server 170, 172, or 174). The source address field 532 can indicate that the response to a DNS request 530 originated from the DNS server with an actual DNS server address of A0::B0:EE:F8FF:FE54.98. The destination address field 534 can indicate the response to a DNS request 530 is to be transmitted to the network interface device 204 with the IP address of FE80::2AB:FF:CC9A:4CA2 (i.e., the IP address where the updated DNS request 520 was transmitted from). The data field 536 of the response to a DNS request 530 can contain the resolution of the DNS query contained in the DNS request. In Figure 5, the data field 530 of the response to a DNS request 530 can specify that the URL www.google.com has an IPv4 address of 72.14.204.105. As an alternative, the data field 530 can contain an IPv6 address or any other addressing protocol address of www.google.com as well. The response to a DNS request 530 can include a transaction ID field 538, as received from the updated DNS request 520. In Figure 5, the response to the DNS request 530 includes a transaction ID of 4583.

The updated response to a DNS request 540 can be produced by the translation logic 370 based on the response to a DNS request 530 received by the network interface device 204 from the DNS server. The updated response to a DNS request 540 can be an exemplary updated response to a DNS request transmitted from the network device 204 for routing to the client device 202 that the DNS query (i.e., the DNS request 510) originated from. The source address field 542 of the updated response to a DNS request 540 can be translated from the actual DNS server address the response originated from (i.e., A0::B0:EE:F8FF:FE54.98) to the virtual address correlated to the actual DNS server address (i.e., 192.168.0.2). As discussed above, the translation logic 370 can perform a lookup in the transaction table 380 to determine the destination IP address of the client device associated with the transaction ID of the response to a DNS request 530 (i.e., 4583). The destination address field 544 of the updated response to a DNS request 540 can be updated by the translation logic 370 to indicate that the updated response to a DNS request 540 is to be transmitted to the client device with an IP address of 192.168.0.101 (i.e., the IP address stored in the transaction entry with transaction ID 4583). The data field 546 of the updated response to a DNS request 540 can continue to indicate that the URL www.google.com has an IP address of 72.14.204.105. The updated response to a DNS request 540 may not include a transaction ID field.

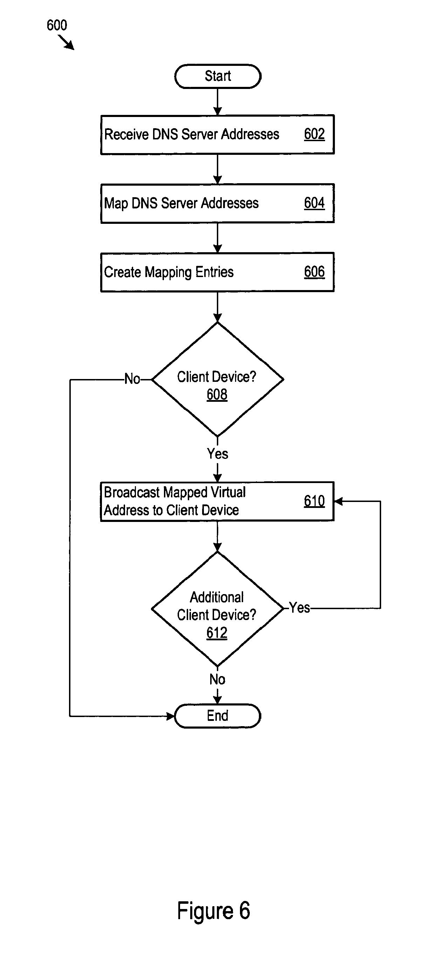

Figure 6 is a flow diagram 600 for mapping actual DNS server addresses to virtual addresses. The steps in the flow diagram 600 can be implemented as logic to be executed by a processor 320 of a network interface device 204, such as the logic in Figure 3 (e.g., the mapping logic 350 and the broadcast logic 360). The steps in the flow diagram 600 can be used to implement, in part, a DNS proxy according to the DS Lite model.

The mapping logic 350 can map actual DNS server addresses to virtual address through storing mapping entries in a mapping table. For example, the mapping logic 350 of a network device 204 can receive the actual DNS server addresses of DNS servers (e.g., DNS servers 170-174) connected to a network (602). The mapping logic 350 can then map each of the received actual DNS server addresses to a respective virtual address (604). Next, the mapping logic 350 can create mapping entries (606) for each actual DNS server address and virtual address pair. As discussed in Figure 4, each mapping entry can correlate an actual DNS server address with a virtual address.

Next, the broadcast logic 360 can transmit the virtual addresses to client devices (e.g., client device 202) in communication with the network interface device 204. The broadcast logic 360 can first determine if any client devices are in communication with the network interface device 204 (608). If so, the broadcast logic 360 can transmit each of the virtual addresses to the client device 202. The broadcast logic 360 can also indicate in the virtual address transmission that the transmitted virtual addresses are addresses of DNS servers to which the client device 202 can direct DNS requests to. Upon transmitting the virtual addresses to a client device 202, the broadcast logic 360 can determine if an additional client device is in communication with the network interface device 204 (612). If so, the broadcast logic 360 can transmit the virtual addresses to the additional client device (610). The broadcast logic 360 can continue to transmit the virtual addresses to each client device in communication with the network interface device 204 (610-612). Additionally, the broadcast logic 360 can transmit the virtual addresses to client devices in communication with the network interface device 204 at a regular time interval (e.g., every hour).

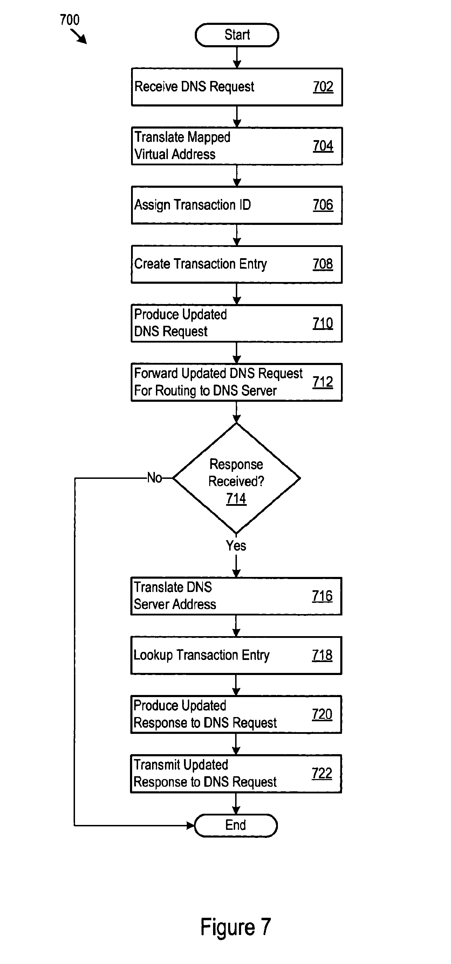

Figure 7 is a flow diagram 700 for handling a DNS request from a client device 202. The steps in the flow diagram 700 can be implemented as logic to be executed by a processor 320 of a network interface device 204, such as the logic described in Figure 3 (e.g., the translation logic 370 and the routing logic 390). The steps in the flow diagram 700 can be used to implement a DNS proxy according to the DS Lite model.

The routing logic 390 can receive communications from a client device. For example, the routing logic 390 of the network interface device 204 can receive a DNS request originating from a client device 202 (702). As discussed above, the DNS request can be based on DNS server management logic 220 executing on the client device 202 (i.e., generated by the DNS server management logic 220 executing on the client device 202). The DNS request can indicate the DNS request is directed to a virtual address. For instance, the DNS request can include a destination address field that stores the IP address of the virtual address.

The translation logic 370 can prepare the DNS request for transmission to a DNS server. The translation logic 370 can translate the virtual address in the destination address field of the DNS request to the correlated actual DNS server address (704). As an example, the translation logic 370 can perform a lookup operation on a mapping table 210 to determine the actual DNS server address correlated to the virtual address identified in the destination address field of the DNS request. The translation logic 370 can then generate and assign a transaction ID to the DNS request (706). Next, the translation logic 370 can create a transaction entry storing the transaction ID assigned to the DNS request and the IP address of the client device the DNS request originated from (708).

As discussed above, the translation logic 370 can produce an updated DNS request (710) based on the DNS request. The updated DNS request can indicate it originated from the network interface device 204 (e.g., include a source address field storing the IP address of the network device). The updated DNS request can also be directed to a DNS server in communication with the network device 204 (e.g., include a destination address field storing an actual DNS server address). The updated DNS request can include the transaction ID of the DNS request as well.

The routing logic 390 can forward communications for routing to the DNS server. For example, the routing logic 390 can forward the updated DNS request for routing to the DNS server identified by the actual DNS server address (712). For example, the routing logic 390 can forward the updated DNS request to a communication interface 310 on the network interface device 204, whereupon the updated DNS request is communicated across a network (e.g., a communication network 140) to the DNS server addressed in the destination address field of the updated DNS request.

The routing logic 390 can also receive communications from the DNS server. The routing logic 390 may or may not receive a response from the DNS server (714) based on the updated DNS request (i.e., a response to the updated DNS request). If no response to a DNS request is received from the DNS server, the routing logic 390 can take no action. Accordingly, the network interface device 204 may not transmit a response to the client device 202 where the DNS query originated from. The DNS server management logic 220 executing on the client device 202 can track the amount of time that has elapsed since a DNS request was sent out. The DNS server management logic 220 can determine that a DNS request has timed out if a response to the DNS request is not received in a certain interval of time (e.g. one second). As discussed above, the DNS server management logic 220 can handle latency issues or non-responsive DNS servers according to an implemented management algorithm. Different client devices in communication with the network interface device 204 can execute DNS server management logic 220 that implements varying management algorithms.

The routing logic 390 of the network interface device 204 can receive a response to a DNS request based on the updated DNS request (i.e., a response to the updated DNS request). The response to a DNS request can include a source address field, storing the IP address of the DNS server the response to a DNS request originated from (i.e., an actual DNS server address).

The translation logic 370 can prepare the response to a DNS request for transmission to the client device. The translation logic 370 can translate the actual DNS server address stored in the source address field to the virtual address correlated with the actual DNS server address (716). For example, the translation logic 370 can perform a lookup operation in a mapping table 210 to determine the virtual address correlated to the actual DNS server address. The translation logic 370 can also perform a lookup in the transaction table 380 (718) based on the transaction ID included in the response to a DNS request to identify a client device (i.e., the client device that the DNS request having the assigned transaction ID originated from).

Then, the translation logic 370 can produce an updated response to a DNS request (720). As discussed above, the updated response to a DNS request can be based on the response to a DNS request, and include the virtual address correlated to the actual DNS server address as the source address. The updated response to a DNS request can also include the client device identified by the transaction table lookup as the destination address.

The routing logic 390 can forward communications to the client device, i.e., the routing logic 380 can then transmit the updated response to a DNS request for routing to the client device the DNS request originated from (722).

The methods, devices, and logic described above can be implemented in many different ways in many different combinations of hardware, software or both hardware and software. For example, all or parts of the system can include circuitry in a controller, a microprocessor, or an application specific integrated circuit (ASIC), or can be implemented with discrete logic or components, or a combination of other types of analog or digital circuitry, combined on a single integrated circuit or distributed among multiple integrated circuits. All or part of the logic described above can be implemented as instructions for execution by a processor, controller, or other processing device and can be stored in a tangible or non-transitory machine-readable or computer-readable medium such as flash memory, random access memory (RAM) or read only memory (ROM), erasable programmable read only memory (EPROM) or other machine-readable medium such as a compact disc read only memory (CDROM), or magnetic or optical disk. Thus, a product, such as a computer program product, can include a storage medium and computer readable instructions stored on the medium, which when executed in an endpoint, computer system, or other device, cause the device to perform operations according to any of the description above.

The processing capability of the system can be distributed among multiple system components, such as among multiple processors and memories, optionally including multiple distributed processing systems. Parameters, databases, and other data structures can be separately stored and managed, can be incorporated into a single memory or database, can be logically and physically organized in many different ways, and can implemented in many ways, including data structures such as linked lists, hash tables, or implicit storage mechanisms. Programs can be parts (e.g., subroutines) of a single program, separate programs, distributed across several memories and processors, or implemented in many different ways, such as in a library, such as a shared library (e.g., a dynamic link library (DLL)). The DLL, for example, can store code that performs any of the system processing described above. While various embodiments of the invention have been described, it will be apparent to those of ordinary skill in the art that many more embodiments and implementations are possible within the scope of the invention. Accordingly, the invention is not to be restricted except in light of the attached claims and their equivalents.

## Claims

1. A method for handling DNS requests comprising:
broadcasting, from a network interface device, multiple virtual addresses to a client device, where the multiple virtual addresses correlate to multiple actual DNS server addresses; and
processing, by the network interface device, a received DNS request originating from the client device, where the DNS request is directed to one of the multiple virtual addresses and where the DNS request is based on DNS server management logic executing on the client device.

2. The method of claim 1, where processing a DNS request comprises:
forwarding the DNS request to a DNS server identified by one of the multiple actual DNS server addresses;
receiving a response to the DNS request originating from the DNS server; and
transmitting the received response to the DNS request for routing to the client device.

3. The method of claim 1, where the broadcasting and the processing implement a DNS proxy according to the Dual Stack Lite model.

4. The method of claim 1, where the received DNS request originating from the client device comprises a destination address field, the destination address field storing one of the multiple virtual addresses.

5. The method of claim 1, where the multiple virtual addresses include IPv4 addresses and the multiple actual DNS server addresses include IPv6 addresses.

6. The method of claim 1, where the network interface device comprises a cable modem.

7. A system for handling a DNS request, comprising:
a processor;
a communication interface coupled to the processor; and
a memory coupled to the processor and communication interface, the memory comprising:
a mapping table;
mapping logic that, when executed by the processor:
correlates an actual DNS server address to a virtual address through storing a mapping entry in the mapping table;
broadcast logic that, when executed by the processor, transmits the virtual address to a client device;
translation logic that, when executed by the processor:
prepares a DNS request for transmission to a DNS server identified by the actual DNS server address, where the DNS request originates from the client device, is directed to the virtual address, and is based on DNS server management logic executing on the client device; and
prepares a response to DNS request for transmission to the client device; and
routing logic that, when executed by the processor:
receives, through the communication interface, communications originating from the client device or the DNS server; and
forwards, through the communication interface, communications for routing to the client device or the DNS server.

8. The system of claim 7, where correlating by the mapping logic executed by the processor comprises:
receiving, through the communication interface, an actual DNS server address, where the actual DNS server address identifies a DNS server on a network;
mapping the actual DNS server address to a virtual address; and
storing a mapping entry in the mapping table, the mapping entry correlating the actual DNS server address and the virtual address.

9. The system of claim 7, further comprising a translation table; and where preparing, by the translation logic, a DNS request for transmission comprises:
translating the virtual address to the actual DNS server address;
assigning a transaction ID to the DNS request;
storing a transaction entry in the transaction table, the transaction entry identifying the client device the DNS request originated from; and
producing an updated DNS request based on the DNS request, where the updated DNS request is directed to the DNS server and comprises a transaction ID field storing the transaction ID of the DNS request.

10. The system of claim 7, where preparing, by the translation logic, a response to a DNS request for transmission comprises:
producing an updated response to a DNS request based on the response to a DNS request, where the updated response to a DNS request comprises a destination address field, the destination address field of the updated response to a DNS request storing an IP address of the client device.

11. The system of claim 9, where:
the DNS request comprises a destination address field, the destination address field of the DNS request storing the virtual address; where:
the updated DNS request comprises a destination address field, the destination address field of the updated DNS request storing the actual DNS server address.

12. The system of claim 9, where the transaction entry comprises the transaction ID and an IP address of the client device.

13. The system of claim 10, where the processor, the communication interface, and the memory comprising the mapping table, the translation table, the mapping logic, the broadcast logic, the translation logic, and the routing logic are on a network interface device.

14. The system of claim 13, where the updated DNS request comprises a source address field, the source address field storing an IP address of the network interface device.

15. A method for handling a DNS request, comprising:
receiving a DNS request originating from a client device, where the DNS request comprises a destination address field, the destination address field of the DNS request storing a virtual address, and where the DNS request is based on DNS server management logic executing on the client device;
translating the virtual address to an actual DNS server address correlated to the virtual address;
producing an updated DNS request, where the updated DNS request comprises a destination address field and transaction ID field, where the destination address field stores the actual DNS server address and where the transaction ID field stores a transaction ID of the DNS request; and
forwarding the updated DNS request for routing to a DNS server identified by the actual DNS server address.
